# EUROPEAN PATENT APPLICATION

(11) **EP 4 484 936 A1**
(43) Date of publication of application: **01.01.2025**
(21) Application number: 24180221.4
(22) Date of filing: 05.06.2024
(51) Int. Cl.: G01N 23/046

(54) **A METHOD FOR SCANNING A PART IN A SCANNING APPARATUS**

(30) Priority: 28.06.2023 GB 202309735
(71) Applicant: Rolls-Royce plc, London N1 9FX (GB)
(72) Inventor: Mulloth, Akhil, Derby, DE24 8BJ (GB); Willcocks, James, Derby, DE24 8BJ (GB); Bosworth, Steven, Derby, DE24 8BJ (GB)
(74) Representative: Rolls-Royce plc

(57) **Abstract**

A method of scanning a part comprises setting software scanning parameters of a scanning apparatus to produce an image. Setting the software scanning parameters includes setting an output voltage to a maximum output value and setting an output current and a magnification so that a power/voxel ratio of the scanning apparatus is in a range of between 2 and 3. The method further comprises scanning the part.

## Description

### TECHNICAL FIELD

The present disclosure relates to a method for scanning a part and can also be used for optimising scanning parameters of a volumetric scanning apparatus such as a computed tomography, CT, scanning apparatus.

### BACKGROUND

The present disclosure is relevant to many scanning technologies, but a primary application is three-dimensional x-ray computed tomography, or CT, which combines multiple x-ray images to recreate a 3-dimensional, 3D, volume, so may be referred to as 3DCT scanning. An x-ray source produces polychromatic x-rays that penetrate a part and form an x-ray image on a detector. The part or object is (usually) rotated through 360 degrees while being imaged multiple times. The x-ray images are combined via a process called reconstruction to produce a 3D representation of the part. Surface determination is then performed to separate the part's volume from the background. Subsequently, cross sections of the part may be viewed by the user.

CT and other scanning may be used to inspect non-line-of-sight areas of parts that are not accessible to alternative inspection techniques such as bore scopes or Non-Destrutive Testing (NDT) techniques. Components with changing, complex cross sections such as turbine blades and vanes face particular scanning challenges. A turbine blade may present an aerofoil cross-section with a leading edge and a trailing edge face. The leading-edge cross-section is thicker than the trailing edge cross-section. The aerofoil section of the part may have a concave blade surface on one side bounded at either end by the leading and trailing edges and a convex blade surface on the other side. Optimising the CT scan parameters for all of the parts at the same time is difficult. In particular, the concave surface of the blade has the potential to concentrate or converge scattered x-rays and create a high level of noise on the concave side, leading to concave side (or concave wall) effects. A concave wall effect produces image artifacts formed on or around the image of the part due to beam hardening and haloing. It is desirable to improve the quality and/or efficiency of CT scanning of parts or objects, such as turbine blades, which may be made from cast metal, and other components, such as additively manufactured parts. This scanning can aid the design process significantly, as new geometries are explored.

CT scanning apparatuses have numerous parameters which may be adjusted before scanning a part. Prior art, often in the form of user manuals from the manufacturers of the CT scanning apparatuses, teaches specific parameter values for use during scanning.

### SUMMARY

According to one aspect, there is provided a method of scanning a part, possibly a new part (that is, a part for which software scanning parameters have not been determined). The method comprises setting software scanning parameters of a scanning apparatus to produce an image. Setting the software scanning parameters includes setting an output voltage to a maximum output value, for example 450kV and setting an output current and a magnification so that a power/voxel ratio of the scanning apparatus is in a range of between 2 and 3, for instance, between 2.25 and 2.75. The method further comprises scanning the part. Surprisingly, the inventor has found that this combination of parameters, although not indicated by the manufacturers, has a beneficial effect in terms of image quality.

The power to voxel ratio may calculated by dividing the product of output voltage and output current by the magnification expressed in terms of voxel edge length. For example, the voltage may be given in units of kV, the current in units of µA and the magnification in units of µm. These are the expected units in this field. Of course, any other suitable units may be used. It will be understood that if other units are used the values of power/voxel ratio may fall outside of the P/V range specified above by some arbitrary multiplier. For instance, if voltage is given in units of Volts and the current remains in units of µA, the P/V ratio may be between 2000 and 3000. The skilled person will appreciate that, if this is the case, the P/V may easily be converted back to the appropriate range by a simple mathematical transformation, i.e., multiplication or division.

The method may further comprise setting a minimum level of filtration for the scan. For example, the minimum level of filtration may be set using a 6mm copper, Cu, filter. Of course, other filters with lower filtration may be used. Other types of filters that may be used are 12.5mm Cu and 19mm Cu copper filters or any other value in this range. Other filter types, for instance, aluminium, tin and/or lead filters may be used. Of course, any suitable filter or filtration material may be used.

The method may further comprise setting a number of projections for the scan at over (and including) 3500. The prior art teaches that the optimum number of projections for a scan is 3141. However, the inventors surprisingly found that setting the number of projections to above 3141 improved image quality. The number of projections may be set in a range from, for example, 3500 to 10,000. Alternatively, the range may start from 3500, 3600 or 3700 to 9900, 9800, 9700. Of course, any values within this range may be appropriate and produce high quality scans.

A pixel binning parameter may be set to "off" for the scan. The inventors found that the highest quality image may be produced with the pixel binning set to off.

A magnification parameter may be set for the scan. For example, the mid-range magnification parameter may be set between 47.7 µm and 59.7 µm voxel edge size (inclusive of these values). The magnification may be set to, or close to, a 53.7 µm voxel edge size.

The inventors identified the magnification of 53.7 µm as an optimum value and found that magnifications around the optimum value may produce high quality scans. For example, magnifications between 47.7 µm and 59.7 µm voxel edge size (inclusive of these values) may produce high quality scans. Likewise, magnifications from 48.7, 49.7 or 50.7 µm to 56.7, 55.7 or 54.7 µm may produce high quality scans. Of course, values close to these may also be used.

An output current may be set for the scan. For example, the output current may be set between 150µA and 450µA. An optimum value of output current may be 288.6 µA. Hence, a suitable range for output current may be centred around 288.6 µA or close to µA. For example, the output current may be set between 150µA and 450µA as above. Alternatively, the range may start from 160, 170, 180, 190, or 200 to 450, 430, 420, 410, or 400 µA. The output may be set to, for instance, between 262.9 µA to 314.4 µA.

The software scanning parameters may be initial software scanning parameters in an initial scan and the method may further comprise taking a plurality of scans with adjusted values in further scans and measuring the quality of the images produced in the initial and further scans.

Measuring the quality of the produced image may comprise calculating a quality index in dependence upon image contrast and/or sharpness. In many types of images, contrast and sharpness are known to be important parameters that represent the overall quality of an image and they may be used to represent quality, either in combination or separately.

The quality index, or QI, may combine measures of contrast (e.g. between the part or object and the background) and measures of sharpness (such as a transition width or gradient between the part and the background) into a single value or parameter which indicates the quality of the associated image. The QI may take different regions of the scan into account, for example high and low contrast regions to take variation across the scan into account. A quality index able to detect contours of the part with sub-voxel accuracy may be used.

The method may comprise taking a plurality of scans with output current and/or magnification adjusted each time to provide different power to voxel ratios. The power to voxel ratio of the image with the highest quality may be identified. For instance, the scanning may be carried out in an iterative process. The power to voxel ratio may be set to 2, for example, and the part scanned. The output current may be increased, and or the magnification decreased, resulting in an increased P/V ratio. The P/V ratio may be increased incrementally, by 0.1, 0.2, 0.3, 0.4, 0.5 and so on, any suitable increment may be used, up to a P/V ratio of 3. The P/V ratio of the scan producing the highest image quality may be identified. Of course, the starting P/V ratio could be any suitable number for the iterative process to apply. For example, the P/V ratio may initially be set to 2.5 or 3 and incremented for each scan as above.

Any scannable part or object and any shape of scannable part may be used in the method. For example, the part may be made of metal or composite, or polymer or a mixture of materials. The part can be cast or moulded or machined or 3D printed (additive manufacturing), for example. The part may be a simple shape, such as a cylinder or sphere, or a more complex object such as a component for use in a machine. Hence the part may be a blade or vane or other complex manufactured part. The part may be a turbine blade. The blade may have a leading edge and a trailing edge separated by blade surfaces. The blade surfaces may be concave and/or convex surfaces. As will be appreciated by those of skill in the art, the turbine blade may comprise an elongate aerofoil section of the turbine blade having a span. A longitudinal axis, or height, may be defined as being parallel to the span of the turbine blade and extending along the span of the aerofoil section.

Of course, the turbine blade is not limited to having a convex surface and concave surface. For example, the turbine blade may have a substantially flat blade surface opposite a concave surface or two concave surfaces opposite one another or any other combination of surfaces from known arrangements.

In one scenario, the scanning apparatus is a two-dimensional or three-dimensional computational tomography, CT, scanning apparatus, with a table or platform or scanning platform which is rotatable about a vertical axis, and with oppositely disposed x-ray emitter and receiver units to either side of the table. The imaging beam emitting element may emit an energy beam within the x-ray region of the electromagnetic spectrum. The emitted x-rays may form a polychromatic x-ray spectrum. The x-rays may be formed by a tungsten metal element within the imaging element. Of course, the emitting element may emit other energy forms such as gamma rays or ultrasound or any other energy beam suitable for scanning. The imaging beam emitting element and the imaging beam receiving element may be oppositely disposed to either side of the support.

The dimensions of a cross-section of a section of the turbine blade or section of the part to be scanned or the part in any of the above methods may be between 5 mm x 25 mm and 20 mm x 60 mm. For example, the dimensions of a cross-section of the part may be between 10 x 30 mm to 15 x 50 mm. The cross section may be taken in a plane parallel to a scanning platform of the scanning apparatus on which the part is positioned. If, for example, the geometry of the part varies along one or more of its dimensions, the dimensions of the maximum cross section may be taken as respective maxima of the two dimensions. The inventors found that the height of the parts scanned (for example in a direction normal to the scanning platform) may be varied with little to no effect of the scan quality of the image formed.

Additionally or alternatively, the cross section of the part may be defined as lying in a plane parallel to a notional line drawn between the emitting and receiving (or detecting) elements of the scanning apparatus.

A cartesian coordinate system comprising X, Y and Z coordinates may be defined. The coordinate system may be orientated with the scanning platform positioned in the X, Y plane so that a line drawn orthogonal to the scanning platform is parallel to the Z axis. Taking the turbine blade as an example, the turbine blade may be positioned on the scanning platform so that the Z axis is parallel to the span, or longitudinal axis as defined above, of the turbine blade.

Using the cartesian coordinate system, the X, Y dimensions of the part may be between 5 mm x 25 mm and 20 mm x 60 mm. For example, the X, Y dimensions of the part may be between 10 x 30 mm to 15 x 50 mm.

The part may fit within a notional cuboid with dimensions between 5mm and 150mm. For example, the notional cuboid may measure between 10 mm x 30 mm x 55mm and 15 mm x 50 mm x 150 mm.

For example, the part may be a turbine blade which may fit within a notional cuboid with dimensions 10 mm x 30 mm x 55mm. That is, the turbine blade may have maxima of length, width, and height of 10 mm x 30 mm x 55mm.

Alternatively, the part may be a larger turbine blade which may fit within a notional cuboid with dimensions 15 mm x 50 mm x 150 mm. That is, the larger turbine blade may have maxima of length, width, and height of 15 mm x 50 mm x 150mm.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### BRIEF DESCRIPTION OF THE DRAWINGS

Examples will now be described with reference to the accompanying drawings, which are purely schematic and not to scale, and in which:
**Figure 1** is a schematic illustration showing an exemplary 3-dimensional CT scanning arrangement;
**Figure 2** is a flow chart showing steps of a method for setting parameters for scanning of a part or a plurality of parts in a scanning apparatus;
**Figure 3** is a diagonal view of an aerofoil section of a turbine blade;
**Figure 4** is a turbine blade with mounting sections contained within a notional cuboid;
**Figure 5** is a graph of a quality scan index against parameters of a scanning apparatus for a scan of a small turbine blade;
**Figure 6** is a graph of a quality scan index against a power parameter of a scanning apparatus for a scan of the turbine blade;
**Figure 7** is a graph of a quality scan index against a magnification parameter of a scanning apparatus for a scan of the turbine blade;
**Figure 8** is a graph of a quality scan index against a power parameter showing a fine optimisation of the power for a scan of the turbine blade;
**Figure 9** is a graph of a quality scan index against a combined power and magnification parameter of a scanning apparatus for a scan of the turbine blade;
**Figure 10** is another graph a quality scan index against a combined power and magnification parameter of a scanning apparatus for a scan of a turbine blade;
**Figure 11** is a graph of a quality scan index against a power to voxel ratio for each data set from **Figures 5-10****;**
**Figure 12** is a graph of a quality scan index against parameters of a scanning apparatus for a scan of larger turbine blade;
**Figure 13** is a graph of a quality scan index against a combined power and magnification parameter of a scanning apparatus for a scan of the larger turbine blade.

### DETAILED DESCRIPTION

Disclosed herein is a collection of parameters that improve imaging of parts and particularly the three-dimensional x-ray computational tomography (3DCT) imaging of parts. Components, such as turbine blades with an aerofoil cross-section, may have a thick leading edge and a thin trailing edge. They may have a concave surface on one side and a convex surface on the other. A problem the inventors identified was poor scan quality and time taken to perform scans of such complex parts. In particular, the concave surface of turbine blades may concentrate or converge scattered x-rays and create a high level of noise on the concave side. A 3DCT scan of a cast metal turbine blade may take 15 minutes; however, due to poor scan quality, manual review of the scan is often necessary to identify features of interest. Such a review by an operator may take 1 hour. Therefore, it is advantageous to improve scan quality and efficiency of CT scanning, and to reduce the cost of inspection.

The inventors completed a detailed optimisation study to understand key process drivers and allow the capability limitations of the 3DCT technique to be understood and mapped. Based on the collective wisdom of the inventors, software parameters that can be chosen by the technician while setting up a 3DCT scan were identified and an initial range for all parameters to be studied was agreed. A full factorial study of the parameters space was executed, and fine optimisation was performed to fine tune the parameters. The study started with a smallest turbine blade and moved up to a larger (small to medium size) turbine blade to identify common trends between different sized blades. Medium to large sized blades required further scan optimisation beyond these software parameters, but the same techniques can be applied. The parameter range identified across multiple cycles of optimisation provides the optimum range of these software parameters suitable for 3DCT scans of turbine blades, and the techniques can be transferred to other parts.

The parameters studied were: Magnification, Voltage, Filtration Thickness, Number of projections, Current, Binning, Beam Hardening settings, Multiple projections (Averaging) and Exposure Time.

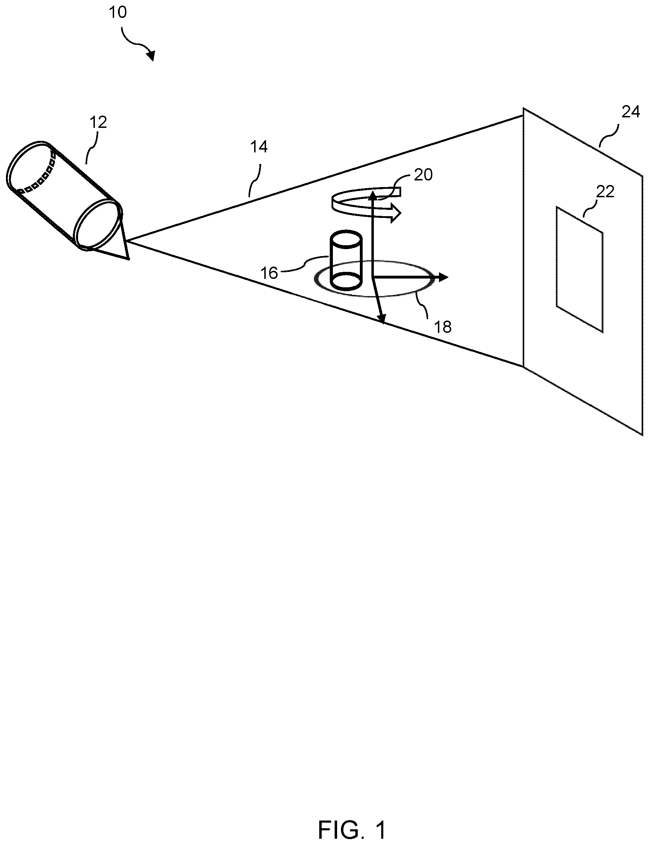

Turning now to consider the drawings in more detail, **Figure 1** illustrates the basic principles of an exemplary 3DCT scanning technique of a type which may be used in the method discussed herein. A 3D computer tomography (CT) scanning apparatus 10 may be used to perform a volumetric scan. The 3DCT scanning apparatus 10 comprises an imaging beam (i.e. x-ray), emitting element 12, a support 18 and an imaging beam (i.e. x-ray), detecting element 24. The volumetric scan may be any scan which is capable of generating a 3-dimensional (3D) image of a part 16 positioned on the support 18 and contained within an x-ray beam cone 14. The x-ray emitting element 12 generates the x-ray beam cone 14 which may comprise polychromatic x-rays (not shown). The support (usually a table on which the part or object or a jig is positioned) may be configured to rotate about a (usually vertical) axis of rotation 20 so that the part 16 positioned directly or indirectly on the support rotates about the axis of rotation. The part is shown here as a simple cylinder. The polychromatic x-rays penetrate the part (or object) and are received by the x-ray detecting element. A volumetric x-ray image 22 of the part is formed from the output of the x-ray detecting element. For example, the output may be processed in a manner known per se to form one or more two-dimensional images in the form of "slices" (cross-sections) through the part.

As will be appreciated, in order to capture complete slices through the relevant section of the part via the type of technique described above, the section of the part being scanned should remain entirely within the x-ray beam cone whilst it is rotated.

An example of a suitable CT scanning apparatus is a Nikon 450kV Rotating target CT scanner with a 450W output power and variable exposure values.

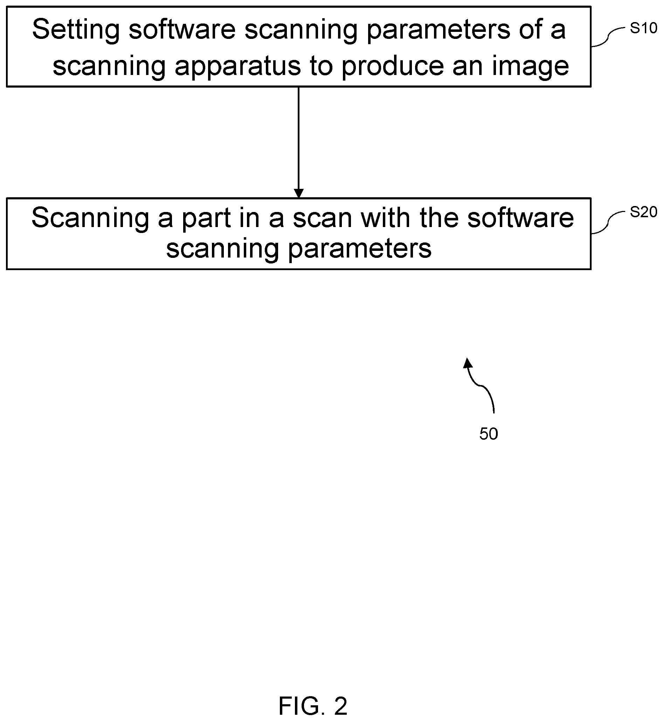

**Figure 2** shows steps of a method 50 for setting parameters for scanning of a part in a scanning apparatus. In S10 the initial software scanning parameters of the scanning apparatus are set to produce an image. The setting of the parameters may include setting an output voltage to a maximum output value of the scanning machine. For example, a maximum output voltage of the scanning apparatus may be 450kV.

In S10 an output current and a magnification may be set so that a power/voxel (P/V) ratio of the scanning apparatus is between 2 and 3. For example, the power/voxel ratio may be between 2.25 and 2.75.

Other parameters of the scanning apparatus may be set to optimise the scan quality. For example, a level of filtration for the initial scan may be set to a minimum. For instance, a 6mm copper filter may be used to set the minimum filtration level. A number of projections for the initial scan may be set to over 3500 and/or a pixel binning parameter for the initial scan may be set to off. Specific optimised ranges and values for the above parameters are discussed in the proceeding sections with reference to the figures.

In step S20, the part is scanned using the initial software scanning parameters. The quality of the produced initial image may be measured and then the scanning parameters may be adjusted to optimize the scan quality. For example, in each iteration with adjusted scanning parameters, the scanning apparatus may be operated at multiple relative angles of rotation to produce an image of the part. A projection or projections may be taken at each angle around a complete 360 degrees and a complete volumetric representation of the part may be obtained from a set of equally angularly spaced projections. The volumetric representation may comprise a plurality of voxels, with each voxel representing a sub-volume of the image. Subsequently the image can be viewed in cross sections, as in known arrangements.

A quality index (QI) may be used to measure the quality of the produced initial image. In many types of images, contrast and sharpness are known to be important parameters that represent the overall quality of an image and they may be used to represent quality, either in combination or separately.

The quality index may combine measures of contrast (e.g. between the part or object and the background) and measures of sharpness (such as a transition width or gradient between the part and the background) into a single value or parameter which indicates the quality of the associated image. The QI may take different regions of the scan into account, for example high and low contrast regions to take variation across the scan into account.

In S20 the scanning parameters may be adjusted to optimize the scan quality. For example, the scanning parameters may be adjusted in response to an initial measurement of the scan quality using the quality index. If, for instance, the quality index indicates a poor contrast region, the scanning parameters may be adjusted accordingly, and the part rescanned. This step may be repeated in an iterative process to improve the scan quality of the part.

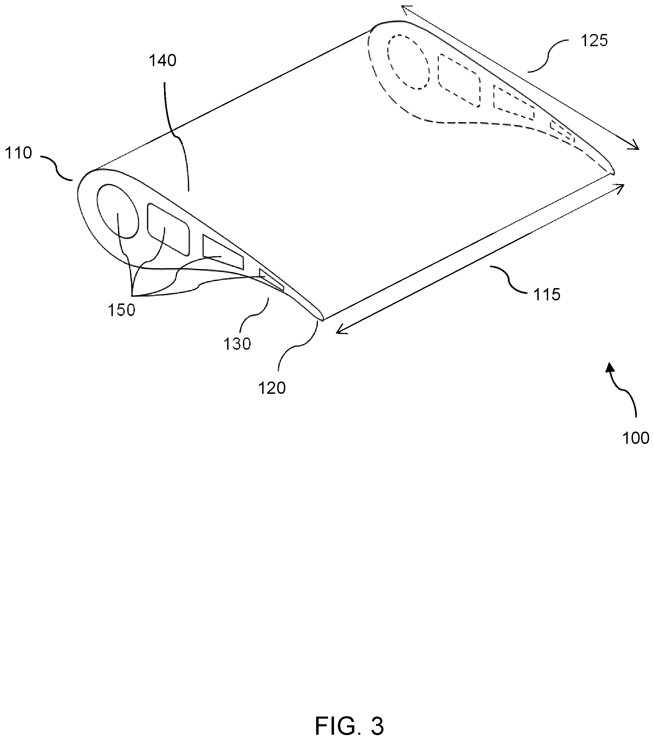

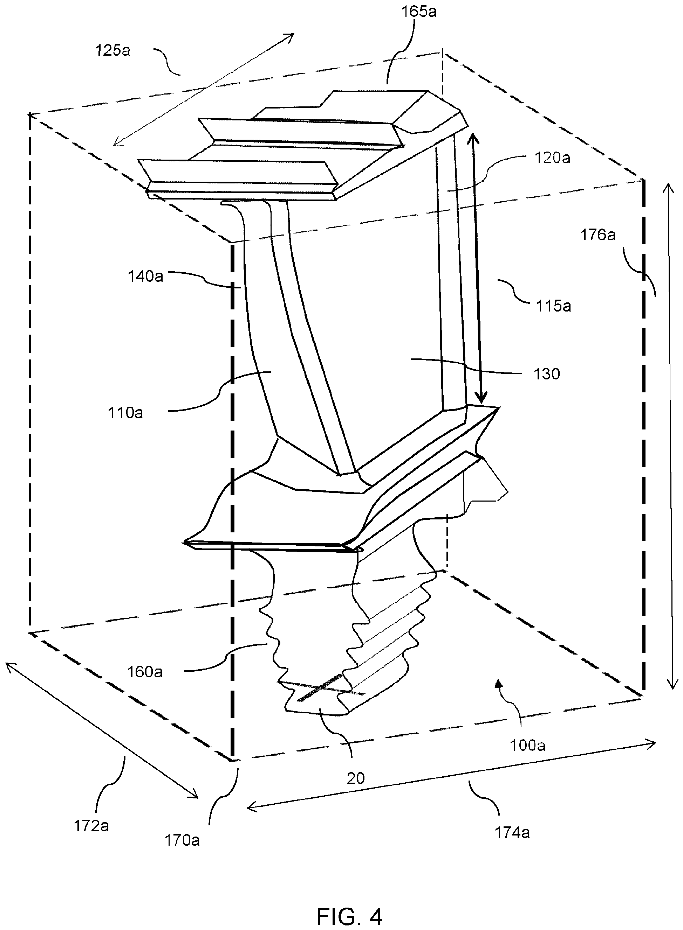

**Figure 3** shows a diagonal view of an aerofoil section of a turbine blade 100. Other sections of the blade, such as a mounting section are shown in Figure 4. The turbine blade in this arrangement is formed from a metal material which may be cast metal, but the teaching herein can be applied to parts or objects of any scannable material.

The turbine blade aerofoil section comprises a leading edge 110, a trailing edge 120, and blade surfaces between these edges, such as a concave surface 130 and a convex surface 140. The concave surface extends in an inwardly curved shape between the leading edge and the trailing edge. The convex surface of the turbine blade extends in a similar manner to the concave surface, but with an outward curve and is opposite to the concave surface. There may be void regions 150 (without the material). For clarity only, exemplary voids are illustrated in Figure 3. There are four voids illustrated, although it will be apparent to the skilled reader that more or fewer voids may be present.

Sometimes only a small region or section of a large part is scanned. For example, the aerofoil section (rather than any essentially orthogonal mounting section) is generally of primary interest when CT scanning turbine blades, and in particular the internal structure of the aerofoil section is to be investigated. The aerofoil section may, for example, be considered as the section of interest of the part.

As will be appreciated by those of skill in the art, the turbine blade comprises an elongate aerofoil section of the turbine blade having a span 115. A longitudinal axis, or height, may be defined as being parallel to the span of the turbine blade and extending along the span of the aerofoil section Further, a chord 125 maybe be drawn between the extremities of the leading edge and the trailing edge.

**Figure 4** shows an example of a turbine blade, with mounting sections 160a and 165a, which may be scanned. The aerofoil section may be substantially similar to the aerofoil section as in Figure 3 or may be different. Features of the aerofoil section in Figure 4 are given like reference numerals as features in Figure 3.

As mentioned above, the inventors scanned small and medium sized turbine blades. Considering a notional cuboid 170a, the small blades may fit within a cuboid with dimensions 10 mm x 30 mm x 55 mm. That is, the dimensions of the cuboid represent the maxima of the length 172a, width 174a and height 176a of the turbine blade. The turbine blade is shown positioned relative to the axis of rotation 20 of the scanning apparatus.

The length and width dimensions of the turbine blade may be defined relative to the scanning platform of the scanning apparatus. For example, the length 172a and width 174a of a part such as a small turbine blade may be any two orthogonal lines measuring dimensions of the part and parallel to a plane of the scanning platform. Similarly, the medium sized blade may fit in a notional cuboid with dimensions 15 mm x 50 mm x 150 mm.

The inventors found that parts with different dimensions may be scanned. For example, the parameter space for optimising scan quality may be suitable for parts with a cross section that can fit in 5 x 25 mm up to 20 x 60 mm dimensions, but of course the teaching can be extrapolated beyond these dimensions. The cross section of the part may be defined in relation to a plane of the scanning platform as in the above definition for length and width. Additionally or alternatively, the cross section may be taken in a plane parallel to a line drawn from an imaging beam emitting element and an imaging beam receiving (or detecting) element of a scanning apparatus, for example the scanning apparatus shown in Figure 1.

The inventors scanned turbine blades with a maximum height of 150mm. However, the inventors found that the height of the part (or object) had minimal to no effect on the scan quality of the CT scanner. Thus, the scanning parameters of the scanning apparatus may be optimised for a part of any height.

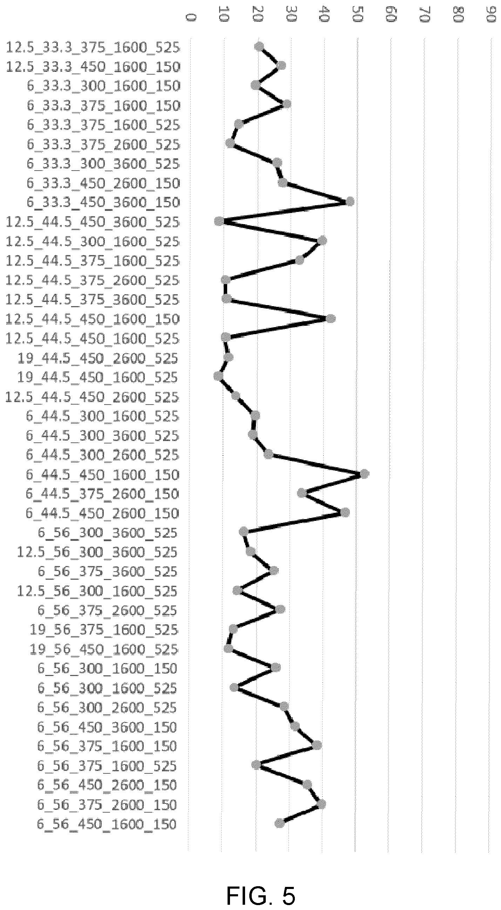

**Figure 5** shows a graph of coarse optimisation of a part (or object) scan produced by manually varying the scanning parameters and checking the quality of the image produced. Here, the object is the small turbine blade as mentioned above with dimension of the maxima of length, width, and height fitting within a cuboid of dimensions 10 mm x 30 mm x 55 mm, respectively.

In many types of images, contrast and sharpness are known to be important parameters that represent the overall quality of an image, and they may be used to represent quality, either in combination or separately. Contrast may be described as the visual ratio of different tones in an image, and sharpness may be described as the clarity or level of detail in an image. A preferred quality index (QI), also referred to as an IndexID, is plotted on the y-axis (here and in the following figures). The quality index combines measures of contrast (e.g. between the object and the background) and measures of sharpness (such as a transition width or gradient between the object and the background) into a single value or parameter which indicates the quality of the associated image. The QI may take different regions of the scan into account, for example high and low contrast regions to take variation across the scan into account and may represent the quality as a number between, for example, 0 (low quality) and 100 (high quality). The QI used herein is more fully explained in United Kingdom patent application GB2219227.2 filed on 20 December 2022, the content of which is herewith incorporated by reference.

The indexID or QI is plotted against the scanning parameters used for each scan on the x-axis in Figure 5. Of course any other suitable, for example automatic, measure of scan quality can be used on the y-axis. The coarse scan optimisation was used by the inventors to identify parameters giving a relatively high scan quality. In turn, one or numerous scanning parameters were varied at one time and the scan quality was measured. Each set of parameters is identified with a label giving values for the corresponding settings on the x-axis.

The x-axis labels include the parameters in the following order: filtration thickness (using a copper filter and in units of millimetres, mm), magnification (in units of micrometres, µm, voxel edge size), voltage (in units of kilovolts, kV), number of projections, and current (in units of microamps, µA). This order of labelling is followed in all figures. The inventors cycled through the available parameters to identify trends in scan quality. Peaks in quality were identified in all scan cycles when the voltage was set to 450kV and the current set to 150µA even when the filtration thickness, magnification, and number of projections were varied. Hence, the inventors identified starting values which could be further optimised.

For example, three currents were initially investigated, that is 150µA, 525µA and 900µA. The inventors identified that 150µA produced the highest scan quality from the three coarse currents investigated.

A scanning parameter varied in the coarse scan was a filtration thickness, shown as the first entry in the x-label. The inventors studied a range of filtration thicknesses, namely 6 mm copper (Cu), 12.5 mm Cu and 19 mm Cu. The inventors identified that a filtration thickness of 6 mm Cu produced a sufficient image contrast for the turbine blades. That is, the filtration thickness may be set to the lowest filtration thickness which produces a sufficient contrast and sharpness to identify material defects, if any. Setting the filtration thickness to the lowest thickness sufficient to achieve a desired scan quality may improve the non-destructive evaluation (NDE) of the image and may improve the scan efficiency of the CT scanning apparatus. The inventors used copper filters but, of course, any suitable filter or filtration material may be used.

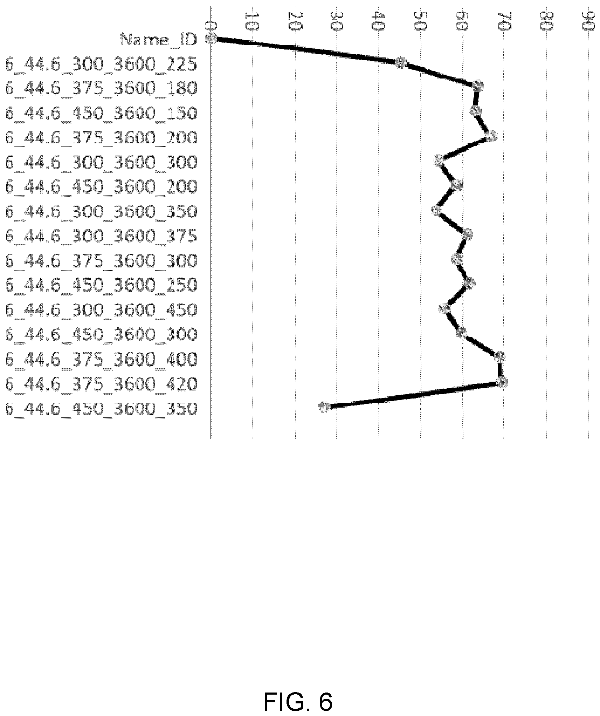

**Figure 6** shows a graph of scan quality resulting from different power outputs. The software scanning parameters were fixed, specifically the filter was set to 6mm Cu, the magnification was set to 44.6µm voxel size, and the number of projections was set to 3600 (other suitable number of projections such as 3500 may be used). The inventors also set a beam hardening pre-set, a software-controlled parameter to BH6. The inventors found that the beam hardening setting could be set to any value with BH6 giving a high-quality scan. The voltage and current were manually increased, between the ranges of 300kV to 450kV and 150µA to 450µA respectively, to increase the power output of the imaging beam emitting element from 75 W to 157.5W. The inventors identified that the highest quality scans during this leg of the study occurred at the 75W, 150W and 157.5W (calculated from multiplying the set voltage and current values), however there was a strong dependence on the voltage-current combination used. That is, for the same power output, different voltage-current combinations caused significant variations in scan quality.

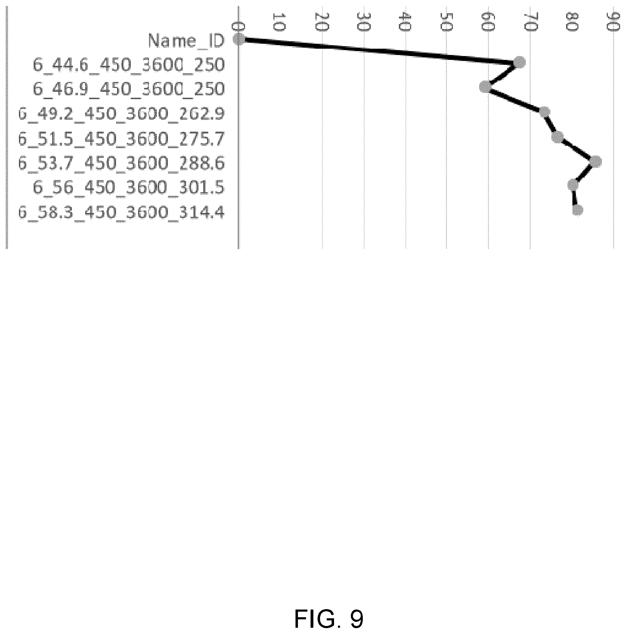

As is evident in Figure 6, the inventors identified a high scan quality for currents between 150 µA and 450 µA. Thus, to improve the scan quality of an image the current may be set between 150 µA and 450 µA. The inventors later identified 288.6 µA as producing the highest quality scans, see figure 9. Alternative suitable current values may therefore be from 160, 170, 180, 190, or 200 to 450, 430, 420, 410, or 400 µA. Although integer values are given here, fractional or decimal values may also be used. That is, a higher resolution in the values for current may be used.

The inventors identified that a voltage of 450 kV, or the maximum voltage possible by the CT scanning apparatus, produced the best scan quality. The prior art teaches that 440 kV is preferred as this voltage produces a more stable beam. However, tests conducted at the same power and magnification did not show a noticeable change in scan quality. A range of voltages, namely 300 kV, 375 kV and 450 kV, were tested with 450 kV identified as producing the best scan quality.

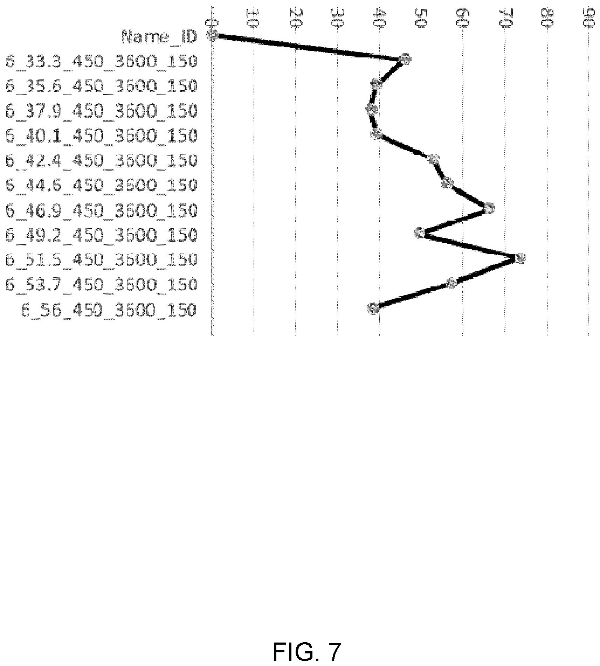

**Figure 7** is a graph of scan quality resulting from different magnifications. The prior art teaches that a maximum magnification or smallest voxel size offers the best scan quality. The inventors varied the magnification of the CT scanning apparatus and fixed all other parameters, namely voltage was set to 450kV and current 150µA. All other parameters took the same values as for the power optimisation cycle, see Figure 6.

The maximum magnification studied was 33.3 µm voxel edge size. The voxel edge size value may be calculated from, for example, the distance between the centre of the part and the emitting element. There may be a finite offset of the centre of the part from the centre of rotation of the support of the CT scanning apparatus and hence the distance measurement may have an associated error. The inventors found that magnification given in voxel edge size was a more reliable and consistent measure than using the distance from the part. A medium magnification studied was 44.6 µm voxel edge and a minimum magnification studied was 56.0 µm voxel edge. The medium magnification, that is 44.6 µm voxel edge, was identified as giving the best scan quality during the coarse optimisation, see Figure 4.

The inventors identified high quality scans with the magnification set between 46.9 µm and 53.7 µm. The magnifications producing the highest quality scans were initially identified as 46.9 µm, 51.5 µm and 53.7 µm. Further investigation, see Figure 9 below, identified a magnification of 53.7 µm voxel edge size as optimum. The inventors identified magnifications around the optimum value may produce high quality scans. For example, magnifications between 47.7 µm and 59.7 µm voxel edge size (inclusive of these values) may produce high quality scans. Likewise, magnifications from 48.7, 49.7 or 50.7 µm to 56.7, 55.7 or 54.7 µm may produce high quality scans.

The inventors identified that the highest quality scan was achieved with a magnification lower than the maximum magnification of the CT scanner. This goes against the prior art which teaches the maximum magnification should be used to generate the highest contrast and sharpness and therefore best quality images.

Using these studies, the inventors identified that the optimum voltage for the imaging beam emitting element was 450kV and the optimum magnification was 53.7 µm voxel edge size. To their surprise, both values disagreed with the teaching in the prior art. The inventors continued to investigate the dependency of the scan quality on power by fixing the voltage at 450kV and the magnification at 44.6µm voxel size, and varying the current.

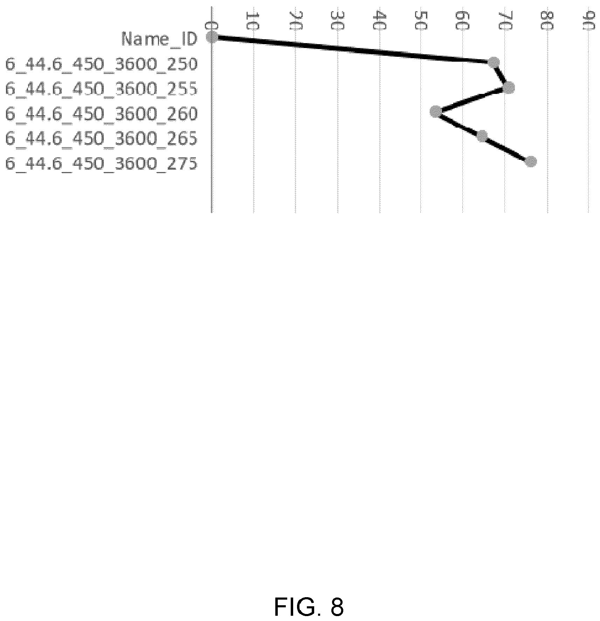

As evidenced in **Figure 8****,** a fine optimisation of power output, a current of 275µA produced the highest quality scan given the range of currents investigated, specifically 250µA to 275µA. This prompted to the inventors investigate a wider range of current values to find an optimum value.

**Figure 9** shows a graph in which magnification and power were optimised together. The current was varied between 250µA and 314.4µA and the magnification was varied between 44.6µm voxel size and 58.3µm voxel size. The inventors identified that at 450kV, that is, the highest possible output voltage of the scanner, the optimum magnification is 53.7 µm voxel edge size. This finding disagrees with the prior art which teaches that the maximum magnification possible by the CT scanner produces the highest scan quality.

The inventors identified a current of 288.6 µA as producing a high quality scan, as evident in Figure 9. In the range of current values investigated a high quality scan was maintained with current values from 262.9 µA to 314.4 µA.

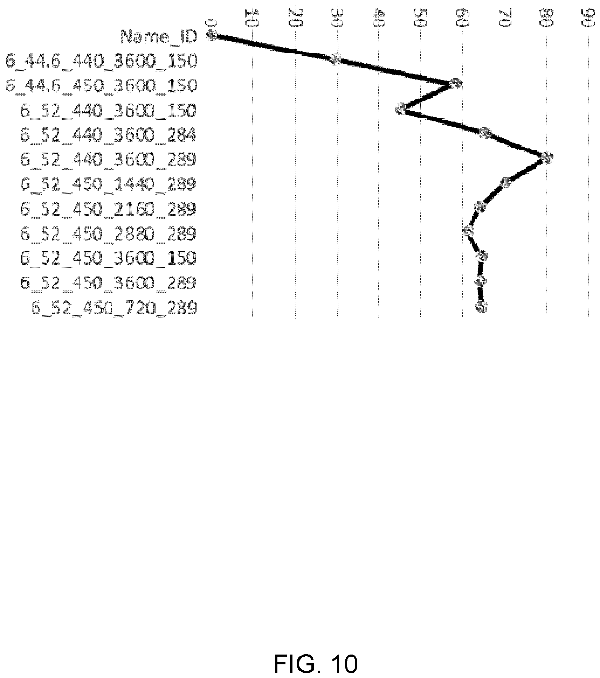

**Figure 10** similarly shows a graph in which magnification and power were optimised together. The magnification was varied between 44.6µm voxel size and 52.0 µm and the current was increased, starting from 150µA (the value found to be optimum in the coarse scan), to 289µA. The inventors identified voltages of 440kV and 450kV and a current of 289 µA produced high quality scans. Further optimisation found that at 450kV, that is, the highest possible output voltage of the scanner, the optimum current for producing the highest quality scans is 288.6 µA.

Another scanning parameter investigated was number of projections. The prior art teaches that the optimum number of projections is 3141 and any number over this produces no, or very little, improvement. The inventors analysed the image quality of scans taken with 1600, 2600 and 3600 projections and found 3600 projections caused the highest reduction in image noise, therefore producing the best quality image. Further, the improved image quality at 3600 projections allowed for smaller defects, if any, in the scanned parts (or objects) to be identified. In the investigation, the number of projections was increased further to a maximum of 10000. Improved image quality as the number of projections increased was still observed. Thus, suitable values for the number of projections may be from 3500 and may be up to 10,000.

Conversely, it was found that if the scans were used for dimensional analysis, for example, then a lower number of projections could be used while maintaining a sufficient image quality. In fact, the inventors found that 1440 projections, corresponding to a scan time of 12 minutes, may produce scans with sufficient image quality. This may improve scanning efficiency as the number of projections, and therefore time per scan, is reduced while maintaining sufficient image quality.

A binning parameter of the scanning apparatus was investigated. This is a software option which virtually combines the detector pixels to form a larger pixel. It was found this had the effect of reducing the scan resolution and may therefore not be used in scanning the parts or the objects.

CT scanning machines may have a beam hardening parameter, with, for example pre-set values between 1 and 6. The inventors found that any pre-set value may be used. For example, a pre-set value of BH6 may produce a high quality scan.

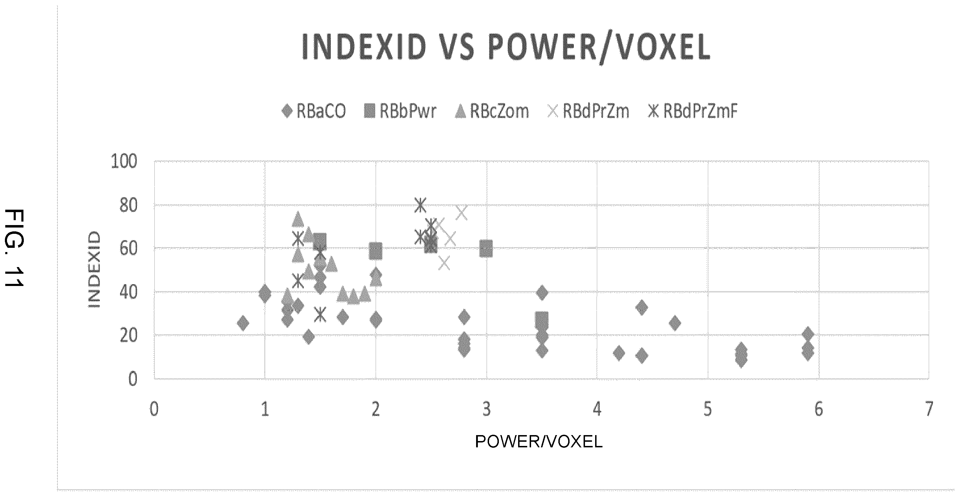

**Figure 11** shows a graph of scan quality (measured using the IndexID), against a power/voxel ratio for each data set in Figures 5-10. The inventors identified that power to voxel (P/V) ratio is a more effective parameter, than using any single parameter, for controlling the image quality of the scan. The power to voxel ratio may be calculated by taking the product of voltage and current, and dividing by the magnification, that is the voxel edge size, in units of µm. Of course, any suitable units may be used.

Instead of varying individual parameters and tracking their effect on scan quality, the inventors found that the power/voxel ratio effectively incorporates several parameters which may be varied together in each scan. For example, the inventors identified that 450kV (or the highest voltage available by the CT scanner) gave the best scan quality. Therefore, a user may set the voltage to 450kV and then adjust the current and magnification to achieve a desired P/V ratio. Additionally, and/or alternatively, they may set the power and have the CT scanner calculate the current required for a certain P/V ratio.

Referring to the key in Figure 11, RBaCO corresponds to the coarse optimisation (Figure 5), RBbPwr the power optimisation (Figure 6), RBcZom the magnification optimisation (Figure 7), RBdPrZm the fine optimisation of power (Figure 8) and RBdPrZmf the optimisation of magnification and power (Figures 9-10). The absolute maximum values for each P/V ratio were chosen as the data values from the coarse optimisation graph while for the remaining Figures 6-10 all data points were used for the plot in Figure 11. Evidently, for all parameters, there are two regions of increased scan quality centred around power/voxel ratios of 1.5 and 2.5. The inventors identified that the P/V values of 1.5 and 2.5 produced higher quality images. Of the two, 2.5 produced a better-quality image than 1.5.

The inventors were surprised by their findings as the identified optimum values narrowed the optimum range to a range smaller than the maximum range recommended by the original equipment manufacturer (OEM). For example, prior art teaches that, for a given power, there is a corresponding spot size. For a normal CT machine, the spot size grows by 1 µm for every watt of power. For example, for a rotating target CT machine this is less than one hence the ability to go up to a P/V ratio of 3.5. It is taught that the spot size should match the voxel size.

Using the optimised parameters discussed herein, that is, for example, the lowest sufficient filtration thickness, the highest possible output voltage, and a co-optimised magnification and current, a power/voxel ratio of 2.42 produced the highest quality scan. Thus, the inventors identified that a P/V range between 2 and 3 (inclusive) may produce the highest quality scan. Alternatively, the P/V ratio may have a lower limit of 2.25, 2.3, or 2.35 and an upper limit of 2.75, 2.7, 2.65. Optimised scanning parameters may be, for example, a filtration thickness of 6mm Cu, an output voltage of 450kV, a magnification of 53.7 µm voxel edge size and a current of 288.6 mA.

The inventors identified that an exposure parameter of the CT scanning machine had fixed values and could only be varied in discrete steps. Consequently, for every exposure level, there is a minimum and maximum P/V ratio that provides sufficient image quality. For example, as shown here, the P/V values around 1.5 correspond to an exposure level of 1000ms, and the P/V values around 2.5 correspond to an exposure level of 500ms. Further optimisation of the exposure parameter may, for example, increase the range of P/V values which provide sufficient scan quality. The skilled person would appreciate that for the same P/V ratio, the exposure time may vary for different magnifications.

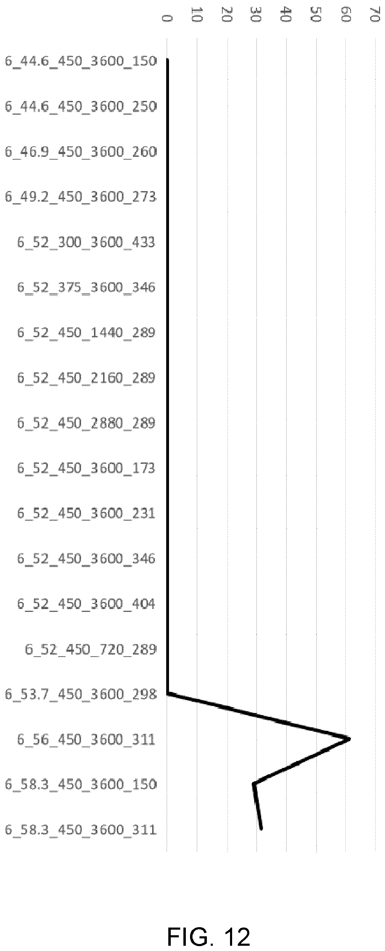

**Figure 12** shows a graph of indexID plotted against the scanning parameters for a small to medium turbine blade larger than the one scanned in Figures 5-9. The filtration thickness was fixed at 6mm Cu for the scans. The beam hardening value may also be set on the scanning apparatus to, for example, a value of BH6.The remaining scanning parameters under investigation were varied to produce a coarse scan. During the coarse optimisation stage, a narrow set of parameters were identified which may provide sufficient scan quality. It was found that the general conclusions and trends identified during the study of the smaller turbine blade applied equally to the larger blade. That is, sufficient scan quality was achieved using 450kV and 6mm Cu filter and the scan quality was not the best at maximum magnification.

The inventors identified that to produce sufficiently high-quality scans the magnification may be set to at least 56.0 µm voxel edge size from the imaging beam emitting source. A subsequent set of scans identified that the scan quality started to drop when the magnification reached 58.1 µm voxel edge size (not shown in the graph).

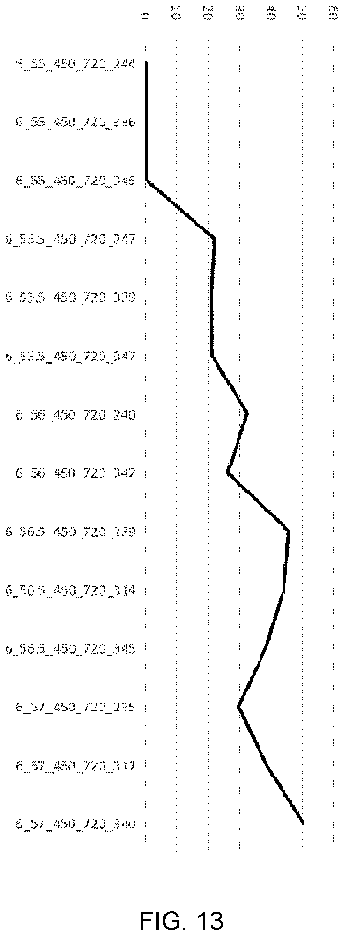

**Figure 13** shows a fine optimisation of magnification and current for the larger turbine blade. That is, an intermediate size blade. For example, an intermediate size turbine blade may have dimensions for the maxima of length, width, and height fitting within a cuboid of dimensions 15 mm x 50 mm x 150 mm, respectively. During fine optimisation the number of projections were dropped to 720 to speed up the scans but the relative comparison of IndexID remains valid. The optimisation was performed between magnifications of 55.0 µm and 58.1 µm. The inventors identified the best scan quality occurred when the magnification was 57.0 µm. Similar to the findings for the smaller blade, the highest quality scan was not achieved when the magnification was set to the maximum possible value.

The inventors scanned turbine blades in this investigation, however, it is of course understood that any object may be scanned. A thorough investigation and mapping of the parameter space for 3DCT was conducted for multiple turbine blade sizes. Across multiple cycles of optimisation parameters of a CT scanning apparatus were identified which may improve the quality of the 3DCT scan, by increasing, for example, image contrast and sharpness. This may therefore facilitate inspection of an object which may have previously not been possible. Further, optimising the parameters may improve the efficiency of the scanning process as, for example, using better starting parameters means that fewer projections may be required to produce a sufficient image and with an improved scan quality less intervention may be required by a trained technician to identify regions of interest.

It is known that altering any of the identified parameters can affect the image quality. However, the inventors have identified ranges of values for all parameters, for a particular size/geometry of component, that together define a region of the parameter space in which image quality will be optimised for that size/geometry. For example, the size of turbine blade scanned by the inventors varied from a smallest blade with dimensions of 10 mm x 30 mm x 55 mm to the largest blade with dimensions 15 mm x 50 mm x 150 mm. The inventors found that the scan quality was not affected by the height of the object. Thus, the scan parameter space may be suitable for parts with a cross-section that can fit in 10 x 30 mm to 15 x 50 mm region. In fact, the inventors found this optimal scanning region may be extended to 5 mm x 25 mm to 20 mm x 60 mm.

It will be understood that the invention is not limited to the arrangements above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method (50) of scanning a part (16, 100, 100a) comprising:
setting software scanning parameters of a scanning apparatus to produce an image, including setting an output voltage to a maximum output value and setting an output current and a magnification so that a power/voxel ratio of the scanning apparatus is in a range of between 2 and 3; and
scanning the part.

2. The method of claim 1, wherein the output current and the magnification are set so that the power/voxel ratio of the scanning apparatus is in a range between 2.25 and 2.75.

3. The method of claim 1 or claim 2, wherein the power to voxel ratio is calculated by dividing the product of output voltage and output current by the magnification expressed in terms of voxel edge length.

4. The method of any of the preceding claims, wherein the method further comprises setting a minimum level of filtration for the scan.

5. The method of claim 4, wherein a 6mm copper filter is used to set the minimum filtration level.

6. The method of any of the preceding claims, wherein the method further comprises setting a number of projections for the scan at over 3500.

7. The method of any of the preceding claims, wherein a pixel binning parameter for the scan is set to off.

8. The method of any of the preceding claims, wherein the magnification parameter is set to between 47.7 µm and 59.7 µm voxel edge size.

9. The method of claim 8, wherein the magnification parameter is set to 53.7 µm.

10. The method of any of the preceding claims, wherein the output current level is set between 150µA and 450µA.

11. The method of claim 10, wherein the output current level is set to 288.6 µA.

12. The method of any preceding claim, wherein the software scanning parameters are initial software scanning parameters in an initial scan and wherein the method further comprises:
measuring the quality of the produced initial image by calculating a quality index in dependence upon image contrast and/or sharpness;
taking a plurality of scans with the software scanning parameters adjusted each time; and
identifying the image with the highest quality.

13. The method of claim 12, wherein the step of taking a plurality of scans includes adjusting the output current and/or magnification each time to provide different power to voxel ratios; and the method further comprises identifying the power to voxel ratio of the image with the highest quality.

14. The method of any of the preceding claims, wherein the scanning apparatus is a computational tomography, CT, scanning apparatus or a three-dimensional, 3DCT, scanning apparatus; and wherein an imaging beam of the scanning apparatus is an x-ray.

15. The method of any of the preceding claims wherein the part is a turbine blade (100, 100a).
